# EUROPEAN PATENT APPLICATION

(11) **EP 3 133 281 A1**
(43) Date of publication of application: **22.02.2017**
(21) Application number: 16176872.6
(22) Date of filing: 29.06.2016
(51) Int. Cl.: F03D 1/06

(54) **WIND TURBINE BLADE WITH TRIPPING DEVICE AND METHOD THEREOF**

(30) Priority: 19.08.2015 WO PCT/IB2015/001837; 29.12.2015 DK 201570884
(71) Applicant: Envision Energy (Jiangsu) Co., Ltd., Jiangyin 214443 (CN)
(72) Inventor: Sun, Yuping, Pearland, TX Texas 77584 (US)
(74) Representative: Olesen, Birthe Bjerregaard

(57) **Abstract**

The present invention relates to a wind turbine and a method of reducing extreme loads and fatigue loads by using a passively activated tripping device arranged on the pressure side of the wind turbine blade. The tripping device is configured to interrupt the passing airflow, when activated, and transform the airflow into a turbulent airflow. The tripping device is positioned close to the leading edge, wherein its dimensions are optimised so that it reduces the maximum lift coefficient as well as increases the minimum lift coefficient which in turn reduces the range of the lift coefficient. The tripping device is activated at both negative and positive angle-of-attacks outside the normal operating range.

## Description

### Field of the Invention

The present invention relates to a method and a wind turbine with a wind turbine blade having one or more passively activated tripping devices arranged on a side surface near the leading edge of the wind turbine blade. The tripping device is configured to interrupt the laminar airflow passing over the wind turbine blade in the chord-wise direction. The tripping device is designed to reduce extreme and fatigue loads experienced in the wind turbine without affecting the aerodynamic performance within the normal operating range.

### Background of the Invention

A main challenge when designing wind turbine blades is to design a wind turbine blade that is structurally robust and has an aerodynamic profile capable of operating under conditions where the surface is clean as well as more rough e.g. due to deposits from insects and dirt. One way of solving this problem is to provide a wind turbine blade having a roughness insensitive aerodynamic profile. However, such an aerodynamic profile will have a large maximum lift coefficient which in turn increases the extreme loads and fatigue loads experienced in the wind turbine blade and other components in the wind turbine.

Another solution is to outfit the aerodynamic profile of the wind turbine blade with vortex generators, slats or Gurney flaps at the leading or trailing edges to increase the lift coefficient and/or the angle-of-attack in order to compensate for the lift loss due to the surface roughness. However, such passively activated devices also increases the extreme loads and fatigue loads in the wind turbine blade and other components in the wind turbine. It is also known that it is possible to add actively controlled deformable units to the aerodynamic profiles capable of altering their outer profile based on control signals received from a controller. However, such active units introduce weak spots in the wind turbine blade and will result in a less reliant solution compared to the above-mentioned passive devices.

The United States patent application US 2009/0028718 A1 discloses a wind turbine blade outfitted with a stall strip arranged on the pressure side for introducing stall, and thus reducing the lift. This stall strip is specifically designed for reducing the minimum lift coefficient at negative angle-of-attacks. The stall strip has a scalene triangular shape and is placed at a chord length of 5% to 30% from the leading edge for optimal stall effect. US 2009/0028718 A1 also states that this stall strip can have an isosceles triangular shape and can be placed at a chord length of 2% to 5%, however, this will result in a reduction in the aerodynamic performance of the wind turbine blade and, thus, in the power production in the normal operating range.

The United States patent application US 2009/0226324 A1 discloses a wind turbine blade outfitted with a stall strip or a deformable unit connected to actuator means which is placed at a chord length of 1% to 20% from the leading edge. This stall strip or deformable unit is specifically designed for reducing the minimum lift coefficient at negative angle-of-attacks. However, this stall strip or deformable unit will also increase the drag and, thus, reduce the aerodynamic performance during normal operation.

The United States patent application US 2012/0263601 A1 discloses a wind turbine blade with a dynamic stall regulation system which is actively operated by an integrated drive unit. A controller uses a load sensor to determine when the loading exceeds a threshold which, in turn, triggers the activation of the drive unit which extends the respective deflector element. This adds to the complexity and total costs of such a system. The extendable deflector elements are designed to separate the airflow passing over the wind turbine blade when deployed, thereby increasing the drag and reducing the lift. The air deflectors thus act as stall devices forming a separation point where the boundary layers of the passing airflow are separated from the pressure or suction side and thus cause an early stall. A first deflector element is placed on the suction side which affects the maximum lift coefficient. A second deflector element is placed on the pressure side which affects the minimum lift coefficient. The first and second deflector elements are placed at a chord length of 5% to 15% from the leading edge. This solution requires two separate deflector elements located on opposite side surfaces in order to affect both the maximum lift coefficient and the minimum lift coefficient.

### Object of the Invention

An object of the invention is to provide a tripping device that reduces the maximum lift coefficient as well as increases the minimum lift coefficient.

An object of the invention is to provide a tripping device that does not reduce the aerodynamic performance within the normal operating range.

An object of the invention is to provide a method of reducing the loads of a wind turbine blade that reduces the maximum lift coefficient and at the same time increases the minimum lift coefficient.

An object of the invention is to provide a method of reducing the loads of a wind turbine blade that can be combined with the effect of vortex generator units.

### Description of the Invention

An object of the invention is achieved by a wind turbine comprising a wind turbine tower, a nacelle arranged on top of the wind turbine tower, a rotatable rotor with at least two wind turbine blades arranged relative to the nacelle, wherein each of the wind turbine blades comprises a tip end, a blade root and an aerodynamic profile, wherein the aerodynamic profile defines a leading edge, a trailing edge, a first side surface which geometrically defines a pressure side (also known as a lower surface) and a second side surface which defines a suction side (also known as an upper surface), wherein a chord extends from the leading edge to the trailing edge and has a chord with a normalized length of 100%, characterised in that at least one first tripping device is arranged on the pressure side on at least one of the wind turbine blades, the at least one first tripping device is placed at a predetermined position relative to the leading edge, and wherein the at least one first tripping device is configured to passively reduce a maximum lift coefficient when said at least one of the wind turbine blades has a positive AoA outside a normal operating AoA range and to passively increase a minimum lift coefficient when said at least one of the wind turbine blades has a negative AoA outside the normal operating AoA range.

The maximum lift coefficient, C_{L-max}, is defined as the maximum positive lift coefficient as function of a positive angle-of-attack (AoA). The minimum lift coefficient is defined as the minimum negative lift coefficient, C_{L-min}, as function of a negative AoA. The AoA is determined based on the pitch angle of the wind turbine blade, the rotor speed, and the wind speed of the wind turbine. During normal operating conditions of the wind turbine blade, the lift coefficient varies with the AoA between the minimum and maximum lift coefficients.

Conventional stall strips, as in United states patent applications, US 2009/0028718 A1 and US 2009/0226324 A1, are designed to only alter the minimum lift coefficient of the wind turbine blade and are thus only designed to function at negative AoAs. Similarly, conventional flaps or slats are designed to only increase the maximum lift coefficient and the corresponding AoA thus these devices are only designed to function at positive AoAs. Other conventional stall devices, as in United States patent application US 2012/0263601 A1, has a first stall element altering the maximum lift coefficient and a second stall element altering the minimum lift coefficient.

The present tripping device is advantageously configured to function at both positive and negative AoAs and thus alters both the minimum and maximum lift coefficients. This reduces the extreme loads occurring when the wind turbine blade is operated outside the normal operating range, e.g. due to extreme wind speeds, wind gusts, wind shares or wind turbulence.

The present tripping device reduces the maximum lift coefficient while at the same time increasing the minimum lift coefficient so that both values are moved towards each other which in turn reduces the range of the lift coefficient of the wind turbine blade. This reduces the fatigue loads occurring as AoA changes from a positive AoA to a negative AoA, or vice versa, when the wind turbine blade is operated outside the normal operating range.

According to one embodiment, said at least one tripping device is further configured to transform an airflow passing over the at least one tripping device from a laminar airflow into a turbulent airflow when the AoA of said one of the at least two wind turbine blades is outside the normal operating AoA range in one direction.

As the wind passes the wind turbine blade, the airflow thereof develops a plurality of boundary layers over the pressure and suction sides in the chord-wise direction. The incoming airflow forms a so called stagnation point or region in the leading edge area of the wind turbine blade in which the wind speed is essentially zero. The airflow then continues along the pressure and suction sides respectively as a laminar airflow and thus laminar boundary layers. A similar stagnation point or region may also be found beyond the trailing edge area.

Conventional stall strips, as in US 2009/0028718 A1 and US 2009/0226324 A1, are designed to cause the passing airflow to separate along the side surface in the chordwise direction from the stall strip towards the trailing edge and thus separate the boundary layers at an earlier point than without such stall devices. This causes the wind turbine blade to stall earlier and in turn reduces the lift earlier than compared to wind turbine blades without such stall devices. These stall strips define a so called separation point or region at which the airflow starts to form a circulation zone.

The tripping device advantageously transforms the laminar airflow and thus the laminar boundary layers into a turbulent airflow and thus turbulent boundary layers. The tripping device defines a transition point or region at which the airflow changes from one condition to another condition. This turbulent airflow then continues along the side surface into the possible separation point or region at which the airflow separates as described above. This in turn may also reduce the amount of ice, dust or other particles accumulating on the side surfaces due to the turbulent airflow.

According to one embodiment, the position of the at least one first tripping device is determined according to a distance along the chord and projected towards the pressure side, where the at least one tripping device is positioned at a distance of 0% to 1% measured along the chord from the leading edge, preferably at a distance of 0.2% to 0.6% from the leading edge.

The transition point/region is located towards the leading edge stagnation point/region and the separation point/region is located towards the trailing edge stagnation point/region. This in turn means that the present tripping device is advantageously positioned closer to the leading edge compared to the conventional stall strips, as in US 2009/0226324 A1.

The wind turbine blade has a total normalised chord length of 100% measured from leading edge to trailing edge. The position of the tripping device is determined by projecting its position onto the chord and measuring the distance from the intersection point to the leading edge. Tests have demonstrated that the tripping device should be positioned at a distance of 0% to 1%, preferably 0.2% to 0.6%, from the leading edge for optimal effect. Whereas conventional stall strips are preferably positioned at a distance of 5% to 20% for optimal effect. By placing the tripping device closer to the leading edge, an earlier reduction of the maximum and minimum lift coefficients can be achieved.

The abovementioned distance is measured relative to a front edge of the tripping device facing the leading edge of the wind turbine blade. Alternatively, the distance may be measured relative to a central longitudinal line of the tripping device or a back edge of the tripping device facing the trailing edge of the wind turbine blade. In this case the installation of the tripping device has to be adjusted accordingly, i.e. the numeric value of the above-mentioned distance has to be proportionally larger than when measuring relative to the front edge of the tripping device.

The chord length of the wind turbine blade at a predetermined longitudinal point, e.g. the point defining the maximum chord length, may be used to determine the chord-wise position of the tripping device. In example, the tripping device may be positioned at a wind turbine blade in the section of the blade where the chord length is between 600 mm and less.

According to one embodiment, the at least one tripping device has a height of 0.05 mm to 1 mm, preferably a height of 0.2 mm to 0.5 mm.

The tripping device has a longitudinal length extending parallel to the longitudinal length of the wind turbine, a width extending in the chord-wise direction, and a height extending outwards from the respective side surface. These dimensions of the tripping device and optionally also the position are optimised relative to the shape and size of the respective wind turbine blade.

The tests have further demonstrated that the tripping device should have a height between 0.05 mm and 1 mm, preferably between 0.2 mm and 0.5 mm, for optimal effect. This enables the tripping device to alter the conditions of the airflow without causing the airflow to separate.

Conventional stall strips need to be higher in order to separate the airflow, e.g. more than twice the height of the tripping device. However, such a device will increase the drag of the wind turbine blade and thus reduce the lift.

According to one embodiment, the at least one tripping device has a width of 0.5 mm to 5 mm, preferably a width of 1 mm to 3 mm.

The tests have further demonstrated that the tripping device should have a width between 0.5 mm and 5 mm, preferably between 1 mm and 3 mm, for optimal effect. This also enables the tripping device to alter the conditions of the airflow without causing the airflow to separate.

Conventional stall strips normally also need to be thicker due to the increased height, e.g. twice the height of the tripping device. Such stall strips may also be subject to greater forces than the tripping device and thus must be designed accordingly. If such a stall strip were placed closer to the leading edge, then it will have a negative effect on the aerodynamic performance of the wind turbine blade during normal operating conditions. The present invention is designed to have no or almost no adverse effect on the aerodynamic performance of the wind turbine blade during normal operating conditions.

The test results indicate that the maximum lift coefficient can be reduced by about 10% compared to a wind turbine blade without such a tripping device. The test results also indicate that the minimum lift coefficient can be increased by about 16% compared to a wind turbine blade without such a tripping device. This in turn means that the range of the lift coefficient can be reduced by more than 20%.

According to one embodiment, at least one second tripping device is further arranged on the pressure side of the at least one wind turbine blade, the at least one second tripping device is placed at another predetermined position relative to the leading edge, wherein the at least one second tripping device is arranged relative to the at least one first tripping device.

Two or more tripping devices may be arranged relative to each other on the pressure side of the wind turbine blade, preferably in the chord-wise direction. The tripping devices may all be configured to alter the maximum and minimum lift coefficients. Alternatively, a first set of tripping devices may be configured to alter the maximum lift coefficient and a second set of tripping devices may be configured to alter the minimum lift coefficient. This allows the dimensions and optionally the position of the respective tripping device to be optimised individually or in pairs relative to the shape and size of the respective wind turbine blade.

It has not previously been disclosed to use two or more devices on the same wind turbine blade cross section. The conventional stall strips as described in US 2009/0226324 A1 and US 2009/0028718 A1 all teach the use of a single device in a given cross section.

According to a special embodiment, the position of the at least one second tripping device is determined according to a distance along the chord and projected towards the pressure side, where the at least one second tripping device is positioned at a distance of 1% to 3% measured along the chord from the leading edge, preferably at a distance of 1.5% to 2.5% from the leading edge.

A first tripping device may be positioned as described above while at least one second tripping device is positioned between the first tripping device and the trailing edge. The second tripping device may be aligned with the first tripping device in the chord-wise direction. In example, the first tripping device may be positioned at a first distance of 0% to 1%, preferably 0.25% to 0.5%, while the second tripping device may be positioned at a second distance of 1% to 3%, preferably 1.5% to 2.5%, most preferably 2% along the chord. Said first tripping device may be optimised to alter the maximum lift coefficient and said second tripping device may be optimised to alter the minimum lift coefficient.

According to another special embodiment, each of the at least two wind turbine blades has a longitudinal length extending from the blade root to the tip end, wherein the at least one second tripping device is offset relative to the at least one first tripping device in the longitudinal direction.

The above-mentioned first and second tripping devices may further be offset relative to each other in the longitudinal direction. The first tripping device may be positioned at a first longitudinal length and the second tripping device may be positioned at a second longitudinal length. Said first and second longitudinal lengths are measured from the blade root of the wind turbine blade. Alternatively, a third tripping device may be positioned relative to the first and second tripping devices in the chord-wise and/or longitudinal direction.

In example, the first tripping device may be positioned at a first distance of 0.1% to 0.3%, preferably 0.15% to 0.25%, while the second tripping device may be positioned at a second distance of 0.3% to 0.5%, preferably 0.35% to 0.45% - all measured along the chord.

The first and second tripping devices may be partly offset so that only a part of the respective devices are aligned with each other. The first and second tripping devices may be fully offset so that the respective devices have opposite facing ends. Said opposite facing ends may be aligned with each other or may define a gap between the first and second tripping device. This further enables the placement of the respective tripping device to be optimised according to the aerodynamic profile and dimensions of the respective wind turbine blade.

According to one embodiment, the at least one first tripping device and, optionally, the at least one second tripping device have a rectangular shape in the chord-wise direction.

The tripping device, i.e. the first or second tripping device, may be made of plastics, metal, wood, composites, a fibrous reinforced material or another suitable material. The tripping device may have a quadrilateral, triangular, circular sectional cross-sectional shape when seen in the chord-wise direction. Said quadrilateral shape includes a squared, rectangular or trapezium shape. Said triangular shape includes an isosceles or scalene triangular shape. Said circular sectional shape includes a semicircular or quarter-circular shape. The tripping device may also have a zig-zag shape when seen in the longitudinal direction.

In example, the tripping device preferably has a rectangular shape which is more resilient to erosions than the triangular shape of the conventional stall strips as described in US 2009/0028718 A1.

According to one embodiment, each of the at least two wind turbine blades has a longitudinal length of 100% extending from the blade root to the tip end, wherein the at least one first tripping device and, optionally, the at least one second tripping device are positioned along the wind turbine blade from a distance of at least 33% measured along the longitudinal length from the blade root, preferably from a distance of at least 66% measured from the blade root, where the at least one tripping strip extends towards the tip end or the vicinity of the tip end of the wind turbine blade.

The wind turbine blade has a total normalised longitudinal length of 100% measured from blade root to tip end. The tripping device is advantageously placed towards the tip end of the wind turbine blade, preferably at a distance of at least 33% measured from the blade root when the position of the tripping device is projected onto the longitudinal length. The tripping device extends in the longitudinal direction and has a predetermined longitudinal length. The conventional stall strips are preferably placed closer to the blade root than the tripping device. This suggests that the stall strips are more subjected to different wind speeds and loads than the tripping device.

The tripping device, i.e. the first or second tripping device, may form a single continuous device or two, three or more sub-devices placed in a consecutive order. Alternatively, one or more of these sub-devices may be offset relative to the remaining devices in the chord-wise direction. The use of multiple sub-devices allows for easier handling and installation. The tripping device or sub-devices may be formed as tapes or stripes extending in the longitudinal direction.

According to one embodiment, at least one vortex generator unit is arranged on the suction side of the at least one wind turbine blade, the at least one vortex generator unit is placed at a predetermined position relative to the leading edge.

The tripping devices may advantageously be combined with one or more vortex generators (VG) units arranged on the wind turbine blade, preferably on the suction side. The VG-unit may be configured to increase the lift coefficient of the wind turbine blade. The VG-unit may further be configured to increase the corresponding AoA of the maximum lift coefficient. This allows the VG-unit to compensate for the lift loss due to surface roughness, e.g. caused by wear or dirt, ice or other contaminations.

An object of the invention is also achieved by a method of reducing loads in a wind turbine comprising a wind turbine tower, a nacelle arranged on top of the wind turbine tower, a rotatable rotor with at least two wind turbine blades arranged relative to the nacelle, wherein each of the wind turbine blades comprises a tip end, a blade root and an aerodynamic profile, wherein the aerodynamic profile defines a leading edge, a trailing edge, a first side surface which defines a pressure side and a second side surface which defines a suction side, wherein a chord extends from the leading edge to trailing edge and has a chord length of 100%, characterised in that the method comprises the steps of:
- arranging at least one tripping device at a predetermined position relative to the leading edge on the pressure side of the at least two wind turbine blades,
- operating one of the at least two wind turbine blades within a normal operating AoA range,
- passively reducing a maximum lift coefficient via said at least one tripping device when said one of the at least two wind turbine blades has a positive AoA outside the normal operating AoA range, and passively increasing a minimum lift coefficient via said at least one tripping device when said one of the at least two wind turbine blades has a negative AoA outside the normal operating AoA range.

The present configuration enables the tripping device to be activated, i.e. to function, outside the normal operating conditions of the wind turbine blade so that it does not affect, i.e. reduces the lift, during the normal operation of the wind turbine blade. Said normal operating conditions may be defined by the normal pitching range of wind turbine blade or the normal operating AoA range. The range may be defined by a first and a second limit value, e.g. a first and second pitch angle or a first and second AoA value. In example, the normal pitch range may be 3 degrees to 10 degrees, e.g. 8 degrees.

Unlike conventional stall strips or other stall introducing or lift enhancing devices arranged on the wind turbine blade, the tripping device is activated at both positive and negative AoAs outside the normal operating range. This in turn means that the maximum and minimum lift coefficients are reduced which in turn reduce the extreme loads and fatigue loads of the wind turbine blade and other components of the wind turbine.

In normal operation, the wind turbine is pitched within the normal pitch range to maximise the power output. The lift of wind turbine accordingly cycles along the lift-to-AoA curve between the maximum and minimum lift coefficients. In this normal mode, the tripping device is not activated.

According to one embodiment, said at least one tripping device transforms an airflow passing over said at least one tripping device from a laminar airflow into a turbulent airflow when the AoA of said one of the at least two wind turbine blades is outside the normal operating AoA range in one direction.

In an extreme event, e.g. due to high wind speeds, wind gusts, wind shears, wind turbulence or other extreme conditions, the wind turbine blade is pitched out of the normal operating range or the AoA changes to a value outside the normal operating range, thereby activating the tripping device. As the AoA exceeds the limit value of the normal operating range in positive or negative direction, the tripping device causes an earlier transformation of the passing airflow and, thus, reduces the extreme loads. Once the extreme event is over, the wind turbine blade is pitched back into the normal operating range or the AoA changes back to a value inside the normal operating range, thereby deactivating the tripping device.

According to one embodiment, said step of arranging the at least one tripping device comprises: attaching the at least one tripping device to said at least one of the wind turbine blades after manufacture of the one wind turbine blade, or providing the at least one tripping device, e.g. integrating the at least one tripping device into the side surface, during manufacture of the at least one of the wind turbine blades.

The tripping device may be formed as part of the wind turbine blade during the manufacture, e.g. by grooves formed in the mould which are then filled with fibrous material during the layup and subsequent cured with resin. Alternatively, the tripping device may be formed during the finishing step of the manufacturing process. This solution is sensitive to tolerances during layup or during the finishing step of the manufacturing process.

One way to solve this problem is to form the tripping device as a separate device which then is fixed to the side surface after the manufacturing process. This allows for an easy removal and replacement if the tripping device gets damaged. The tripping device may be adhered to the side surface means using an adhesive layer. The tripping device may be shaped in a 3M-tape (also known as helicopter tape) or a Polyurethane (PU) tape and then applied to the wind turbine blade. The tripping device may also be glued to the side surface using glue applied to the bottom surface of the tripping device and/or the side surface of the wind turbine blade. Alternatively, the tripping devices may be attached by using fastening elements such as bolts or rivets.

According to one embodiment, the at least one tripping device is positioned on the at least one of the wind turbine blades using an installation tool, wherein said installation tool comprises means for receiving the at least one tripping device and means for aligning the at least one tripping device relative to at least one reference point.

The tripping device may be correctly positioned on the respective side surface using an installation tool. The installation tool may comprise one or more openings for receiving and holding one or more tripping devices. The installation tool may further comprise one or more positioning means for placement of the tool on a part, e.g. the side surface and/or leading edge, of the wind turbine blade. Said positioning means may be a support bracket or a foot, where the bracket or foot are shaped to conform to the contours of a specific part of the wind turbine blade, and alternatively, said support bracket or foot may be adjustable so that they can be adjusted to follow the contours of the wind turbine blade.

The installation tool may further comprise aligning means for aligning the tripping device relative to one or more reference points of the wind turbine blade. Said aligning means may be a measuring unit, a light source such as a laser unit, a fixed unit having a predetermined size and shape or other suitable means for aligning the tripping device. The aligning means may be adjustable so that the position of the tripping device can be moved into the correct position. The reference point may be a marking of the wind turbine blade, the leading or trailing edge, the tip end or another suitable reference point.

In example, the tip end and trailing edge may be used as reference points as they are easy to define contrary to the leading edge, which is more difficult to define. The positioning means may further comprise one or more openings for positioning the installation tool relative to one or more tripping devices already installed. The installation tool may be operated manually or via a controller connected to the installation tool. This allows for an easier installation process of the tripping device relative to the reference points and, in turn, a more precise placement of the tripping device on new wind turbine blades as well as old wind turbine blades.

The installation tool may further comprise means for fixing the tripping device to the wind turbine blade. Said fixing means may be a unit for applying glue or an adhesive to the bottom surface of the tripping device. The fixing means may also be configured to apply pressure and optionally heat to the tripping device when it has been placed on the wind turbine blade. This ensures a good fixture between the tripping device and the wind turbine.

Once the installation process is completed, the installation tool may be removed from the wind turbine blade and the tripping devices.

### Description of the Drawing

The invention is described by example only and with reference to the drawings, wherein:
- Fig. 1: shows an exemplary embodiment of a wind turbine;
- Fig. 2: shows the airflow around the wind turbine blade without a stall device;
- Fig. 3: shows the airflow around the wind turbine blade outfitted with a stall device;
- Fig. 4: shows a first embodiment of a tripping device according to the invention;
- Fig. 5: shows a second embodiment of the tripping device and a stall delaying device according to the invention;
- Fig. 6: shows a third embodiment of the tripping device and the stall delaying device according to the invention;
- Fig. 7a: shows an embodiment of a first tripping device installed along approximately the outer 25% of a blade;
- Fig. 7b: shows an embodiment of a first tripping device installed along approximately the outer 60% of a blade;
- Fig. 7c: shows embodiments of a first and second tripping device according to the invention;
- Fig. 8: shows the airflow around the wind turbine blade without the tripping device;
- Fig. 9: shows the airflow around the wind turbine blade outfitted with the tripping device;
- Fig. 10: shows a first graph of the lift coefficient relative to the angle-of-attack;
- Fig. 11: shows a first graph of the lift coefficient relative to the drag coefficient;
- Fig. 12: shows a second graph of the lift coefficient relative to the angle-of-attack;
- Fig. 13: shows a second graph of the lift coefficient relative to the drag coefficient; and
- Fig. 14: shows a graph of the maximum lift coefficient relative to the position of the tripping device.

In the following text, the figures will be described one by one and the different parts and positions seen in the figures will be numbered with the same numbers in the different figures. Not all parts and positions indicated in a specific figure will necessarily be discussed together with that figure.

### Reference list

- 1.: Wind turbine
- 2.: Wind turbine tower
- 3.: Nacelle
- 4.: Wind turbine blades
- 5.: Pitch mechanism
- 6.: Tip end
- 7.: Blade root
- 8.: Leading edge
- 9.: Trailing edge
- 10.: Pressure side
- 11.: Suction side
- 12.: Airflow
- 13.: Stall device
- 14.: Tripping device, first tripping device
- 15.: Stall delaying device
- 16.: Second tripping device
- 17.: Maximum lift coefficient
- 18.: Minimum lift coefficient
- 19.: Normal operating range
- 20.: Position of tripping device
- 21.: Chord

### Detailed Description of the Invention

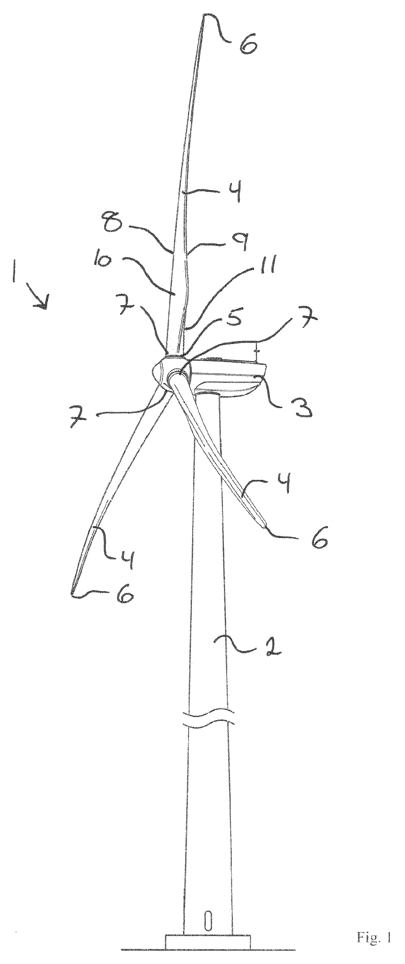

Fig. 1 shows an exemplary embodiment of a wind turbine 1 comprising a wind turbine tower 2. A nacelle 3 is arranged on top of the wind turbine tower 2 and connected to the wind turbine tower 2 via a yaw mechanism (not shown). A rotor comprising at least two wind turbine blades 4, here three blades are shown, is rotatably connected to a drive train arranged inside the nacelle 3 via a rotation shaft. The wind turbine blade 4 is rotatably connected to a hub via a pitch mechanism 5 controlled by a pitch control system.

Each wind turbine blade 4 has a tip end 6, a blade root 7 and a body having an aerodynamic profile which defines a leading edge 8 and a trailing edge 9. The side surfaces of the aerodynamic shaped body define the pressure side 10 and the suction side 11 respectively.

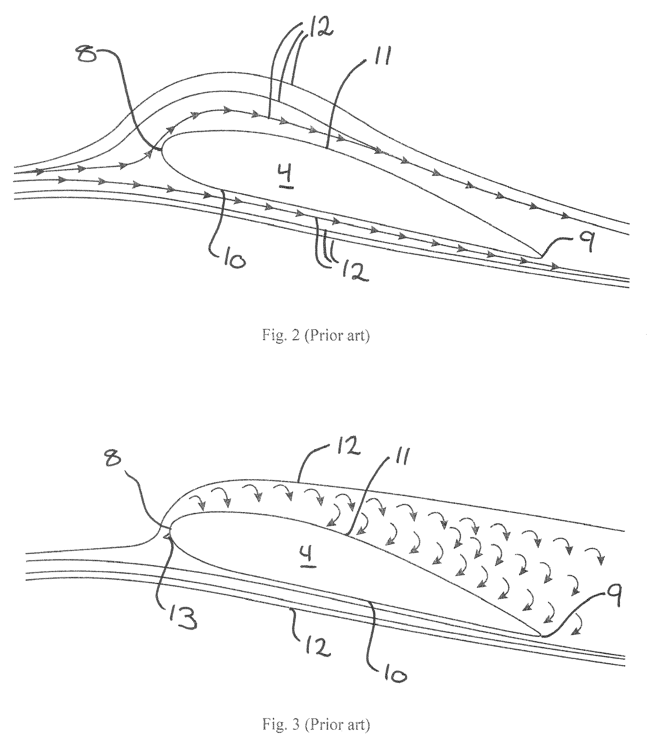

Fig. 2 shows the airflow around the wind turbine blade 4 with no stall devices provided on the pressure side 10. The incoming wind hits the wind turbine blade at an AoA measured relative to the chord extending from the leading edge 8 to the trailing edge 9. The passing airflow 12 develops a plurality of boundary layers over the respective pressure and suction sides 10, 11 as illustrated in figs. 2 and 3.

Fig. 3 shows the passing airflow 12 around the wind turbine blade 4 outfitted with a conventional stall device 13. The stall device 13 is designed to separate the passing airflow 12 along the suction side 11 as illustrated in fig. 3 and thereby causing the wind turbine blade 4 to stall earlier compared to the wind turbine blade 4 of fig. 2.

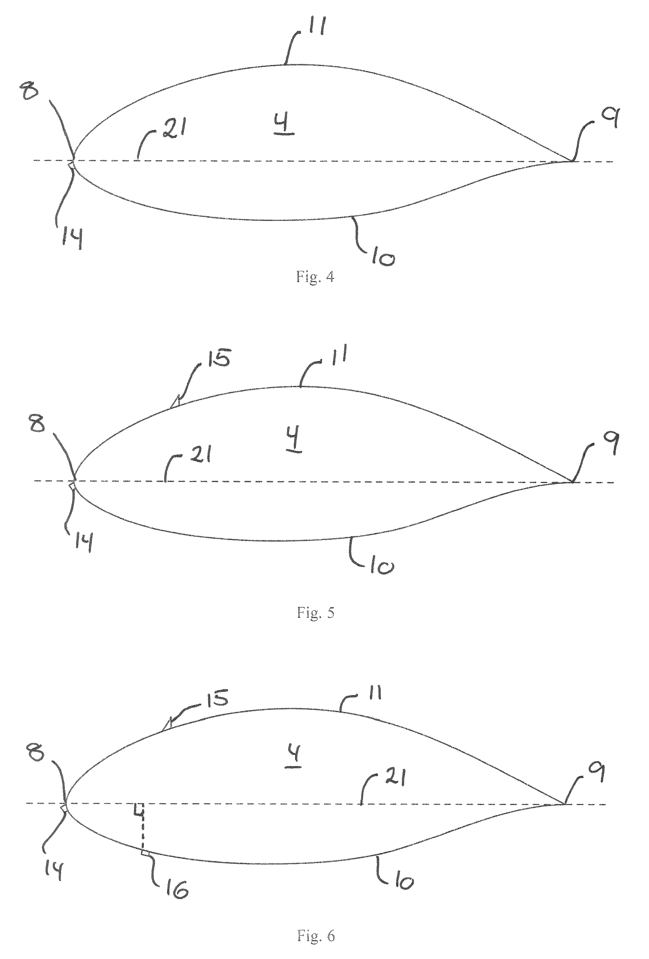

Fig. 4 shows a first embodiment of a tripping device 14 arranged on the pressure side 10 of the wind turbine blade 4. The tripping device 14 is positioned relative to the leading edge 8 and has a longitudinal length, a transverse width and a height extending outwards from the pressure side 10.

The tripping device 14 is preferably positioned at a distance of 0% to 1% measured along the chord 21 (indicated by the dashed line) from the leading edge 8. As illustrated, the tripping device 14 has a rectangular cross-sectional profile, however, other cross-sectional profiles may be used depending on the respective aerodynamic profile and dimensions of the wind turbine blade 4. The dimension of the tripping device 14 is designed for transforming the passing airflow 12 from a laminar condition to a turbulent condition. This in turn reduces the maximum lift coefficient and also increases the minimum lift coefficient of the wind turbine blade 4. The tripping device 14 has a width between 0.5 mm and 5 mm and a height between 0.05 mm to 1 mm for optimal effect on the maximum and minimum lift coefficients.

Fig. 5 shows a second embodiment wherein a stall delaying device 15 in the form of a VG-unit is arranged on the suction side 11 of the wind turbine blade 4 shown in fig. 4.

The stall delaying device 15 is designed for a different purpose, i.e. delaying stall, than the tripping device 14. Thus, the cross-sectional profile and dimensions of the stall delaying device 15 differ from those of the tripping device 14. The profile of the stall delaying device 15 causes the overall lift coefficient of the wind turbine blade 4 to increase which in turn compensates for the lift loss due to an increasing surface roughness of the wind turbine blade 4. The dimensions of the stall delaying device are known and will not be described in further details.

The positions of the tripping device 14 and the stall delaying device 15 is projected onto the chord 21 (dashed line) and measured along the chord 21 relative to the leading edge 8. As illustrated, the stall delaying device 15 is placed at a distance located closer to the trailing edge 9 compared to that of the tripping device 14.

Fig. 6 shows a third embodiment wherein a second tripping device 16 is further arranged on the pressure side 10 of the wind turbine blade shown in fig. 5. The first tripping device 14 is positioned at a first distance from the leading edge 8 while the second tripping device 16 is positioned at a second distance from the leading edge 8. As illustrated, the second tripping device 16 is positioned between the first tripping device 14 and the trailing edge 9. The first and second distances are here measured along the chord and projected as illustrated with the dashed line normal to the chord 21.

The cross-sectional shape and dimensions of the first tripping device 14 is optimised to reduce the maximum lift coefficient. The cross-sectional shape and dimensions of the second tripping device 16 is optimised to increase the minimum lift coefficient.

The first and second tripping devices 14, 16 of fig. 6 are aligned relative to each other in the chord-wise direction.

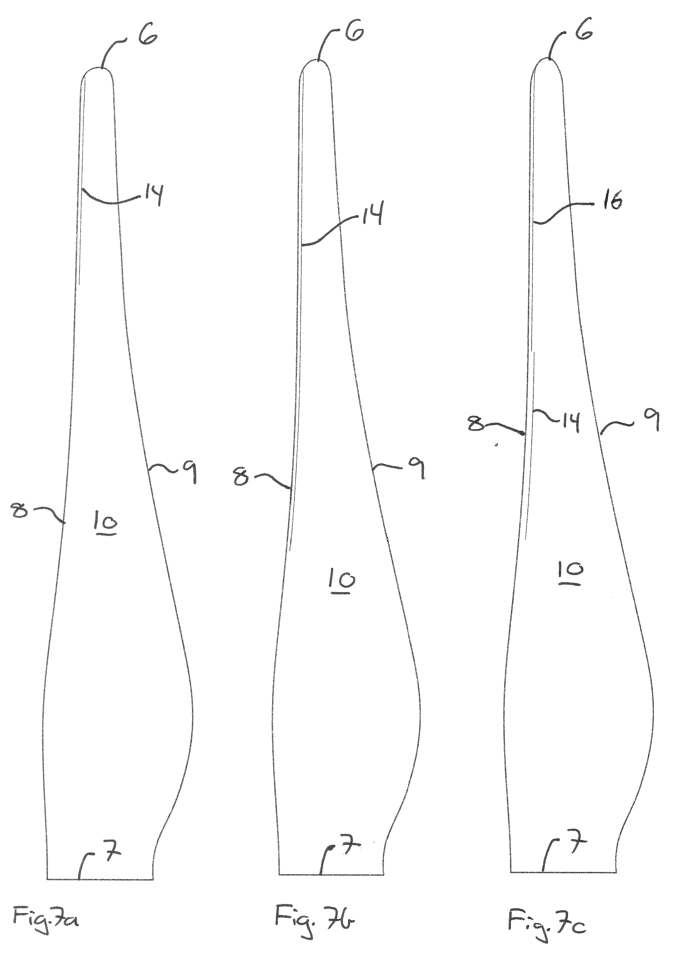

Fig. 7a shows an embodiment of a first tripping device 14 installed along approximately the outer 25% of a blade 4 seen from the pressure side 10. In this embodiment, the stall delaying device 15 may be omitted.

Fig. 7b shows an embodiment of a first tripping device 14 installed along approximately the outer 60% of a blade 4 seen from the pressure side 10. In this embodiment, the stall delaying device 15 may be omitted.

Fig. 7c shows embodiments of a first and second tripping device according to the invention, where the second tripping device 16 is offset relative to the first tripping device 14 in a longitudinal direction towards the tip end 6. The wind turbine blade 4 has a longitudinal length extending from the blade root 7 to the tip end 6. The first tripping device 14 is placed at a first distance between approximately 25% to 65% measured along the longitudinal length from the blade root 7. The second tripping device 16 is placed at a second distance between approximately 65% to 100% measured along the longitudinal length from the blade root 7. The offset between the first and second tripping devices 14, 16 may be determined according to the aerodynamic profile and dimensions of the respective wind turbine blade 4. Here the offset is approximately 0%.

The first and second tripping devices 14, 16 is in fig. 7c illustrated as being offset relative to each other in the chord-wise direction. However, the second tripping device 16 may also be aligned in the chord-wise direction with the first tripping device 14 so that both tripping devices are placed at the same distance from the leading edge 8.

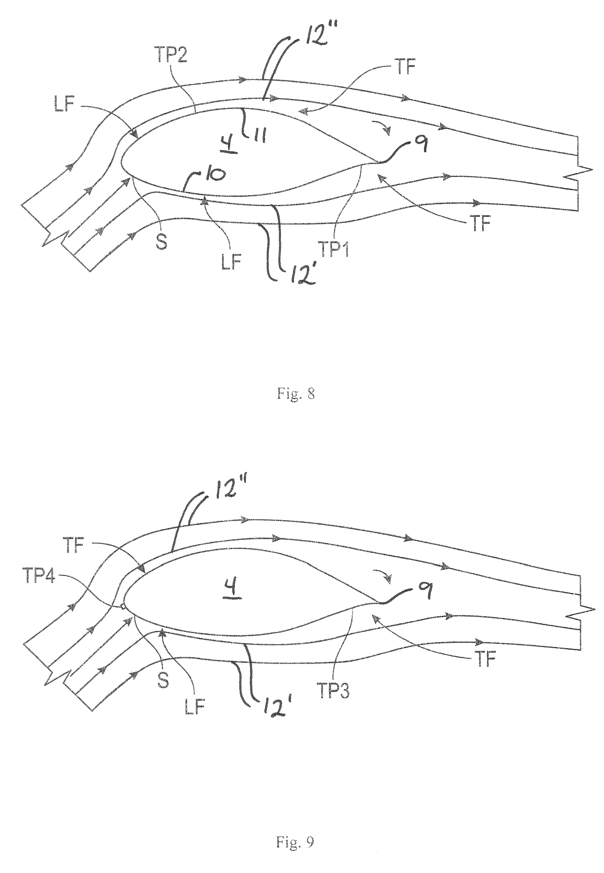

Fig. 8 shows the passing airflow 12 around the wind turbine blade 4 without the tripping device 14, 16. As illustrated, the incoming wind initially forms a stagnation point, S, near the leading edge 8.

The airflow 12 then passes along the pressure and suction sides 10, 11 towards the trailing edge 9. The airflow 12' on the pressure side 10 then passes a transition point, TP1, where the airflow 12' transforms from a laminar airflow, LF, to a turbulent airflow, TF. Likewise, the airflow 12" on the suction side 11 then passes a transition point, TP2, where the airflow 12" transforms from a laminar airflow, LF, to a turbulent airflow, TF.

The airflow then further passes towards the trailing edge 9 and finally separates from the respective pressure and suction sides 10, 11 at a separation point (not shown).

Fig. 9 shows the airflow 12 around the wind turbine blade 4 outfitted with the tripping device 14. As illustrated, the tripping device 14 forms a transition point, TP4, where the airflow 12" transforms from a laminar airflow, LF, to a turbulent airflow, TF. This causes an earlier transformation of the airflow 12 and thus reduces the effect of the laminar airflow compared to the wind turbine blade of fig. 8.

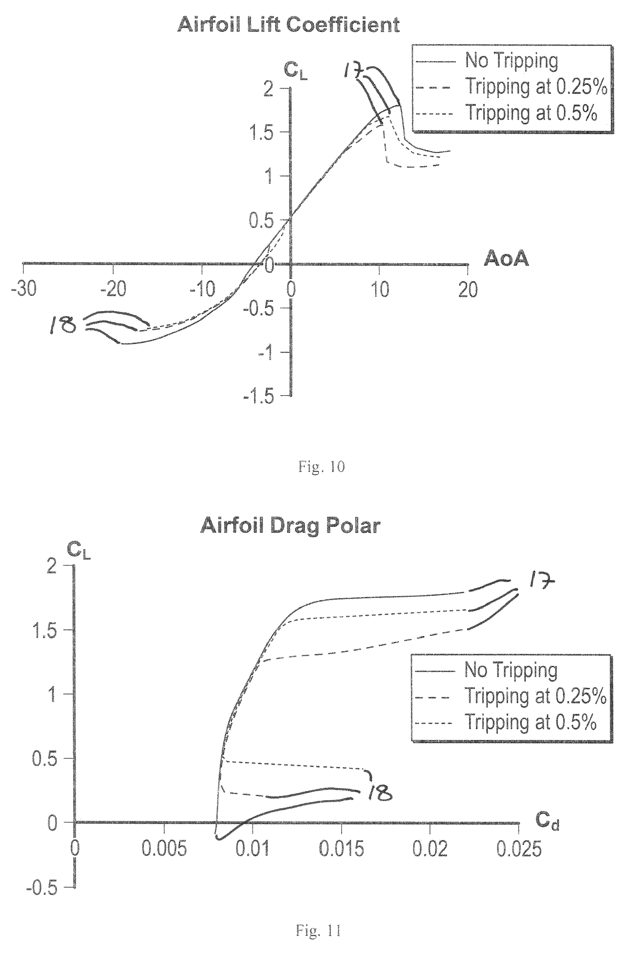

Fig. 10 shows a first graph of the lift coefficient, C_{L}, relative to the angle-of-attack, AoA. A first curve (solid line) shows the lift coefficient of the wind turbine blade 4 where no tripping device 14 is provided on the pressure side 10. A second curve (dashed line) shows the lift coefficient where a tripping device 14 is provided on the pressure side 10 at a distance of 0.25%. A third curve (dotted line) shows the lift coefficient where a tripping device 14 is provided on the pressure side 10 at a distance of 0.5%.

As illustrated by the second and third curves, the maximum lift coefficient 17 is reduced towards the minimum lift coefficient compared to that of the first curve. Likewise, the minimum lift coefficient 18 is increased towards the maximum lift coefficient compared to that of the first curve. This reduces the extreme loads occurring when the wind turbine blade 4 is pitched outside the normal pitch range.

Fig. 11 shows a first graph of the lift coefficient, C_{L}, relative to the drag coefficient, C_{d}. A first curve (solid line) shows the lift coefficient of the wind turbine blade 4 where no tripping device 14 is provided on the pressure side 10. A second curve (dashed line) shows the lift coefficient where a tripping device 14 is provided on the pressure side 10 at a distance of 0.25%. A third curve (dotted line) shows the lift coefficient where a tripping device 14 is provided on the pressure side 10 at a distance of 0.5%.

As illustrated by the second and third curves, the tripping device 14 does not adversely affect the lift coefficient in the normal operating range 19. The tripping device 14 reduces the range between the maximum lift coefficient 17 and the minimum lift coefficient 18. This also reduces the fatigue loads occurring when the wind turbine blade 4 is pitched within the normal pitch range.

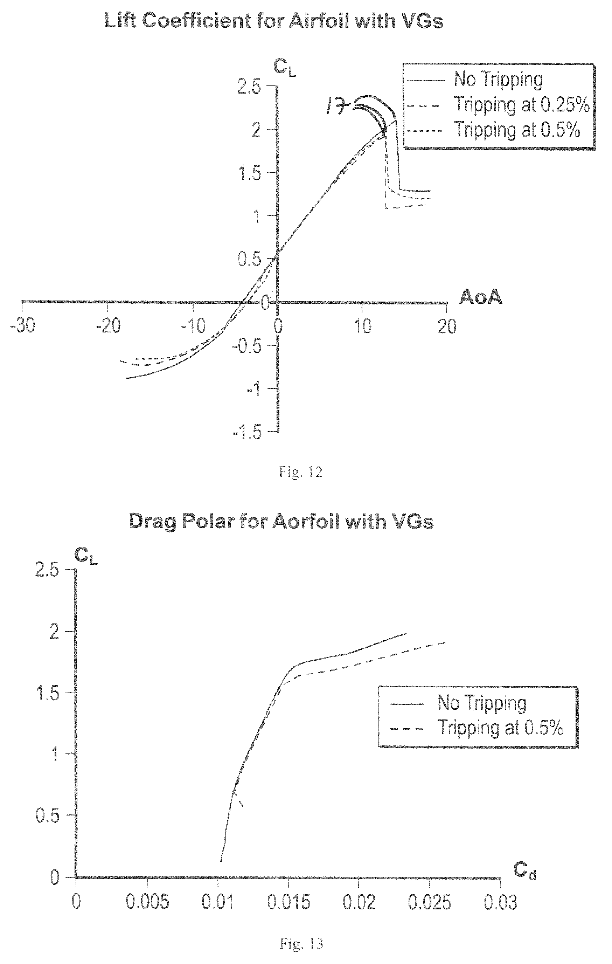

Fig. 12 shows a second graph of the lift coefficient, C_{L}, relative to the angle-of-attack, AoA. This graph differs from the first graph of fig. 10 by both a stall delaying device 15 and a tripping device being provided on the wind turbine blade 4.

As illustrated by the second and third curves (dashed and dotted lines), the maximum lift coefficient 17 is increased compared to that of the first curve of fig. 10. Likewise, the AoA corresponding to the maximum lift coefficient 17 is increased compared to that of the first curve of fig. 10.

Fig. 13 shows a second graph of the lift coefficient, C_{L}, relative to the drag coefficient, C_{d}. This graph differs from the first graph of fig. 11 by both a stall delaying device 15 and a tripping device being provided on the wind turbine blade 4.

As illustrated by the second curve (dashed line), the lift coefficient is increased compared to the third curve of fig. 11.

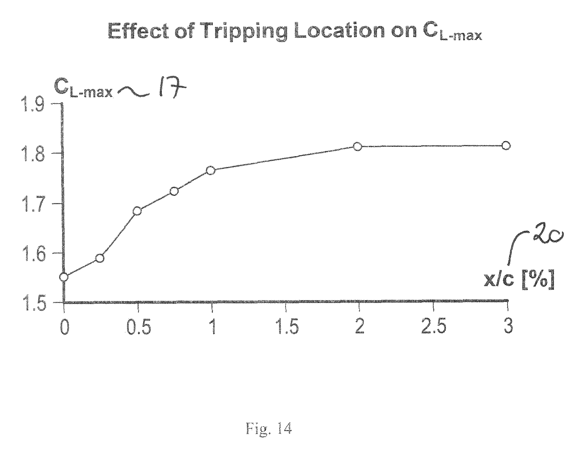

Fig. 14 shows a graph of the maximum lift coefficient 17, C_{L-max}, relative to the position 20, x/c, of the tripping device 14. The position 20 is defined as the distance from the leading edge 8 along the chord measured in percentage of the total normalised chord length of the wind turbine blade 4.

As illustrated, the optimal effect of the tripping device 14 is obtained if the tripping device 14 is positioned at a distance between 0% and 1%, preferably between 0.2% and 0.6%. If the tripping device 4 is positioned at a distance greater than 1%, the tripping device has substantially no effect on the maximum lift coefficient 17.

## Claims

1. A wind turbine comprising a wind turbine tower, a nacelle arranged on top of the wind turbine tower, a rotatable rotor with at least two wind turbine blades arranged relative to the nacelle, wherein each of the at least two wind turbine blades comprises a tip end, a blade root and an aerodynamic profile, wherein the aerodynamic profile defines a leading edge, a trailing edge, a first side surface which defines a pressure side, and a second side surface which defines a suction side, wherein a chord extends from the leading edge to the trailing edge and has a chord length of 100%, **characterised in that** at least one first tripping device is arranged on the pressure side on at least one of the wind turbine blades, the at least one first tripping device is placed at a predetermined position relative to the leading edge, and wherein the at least one first tripping device is configured to passively reduce a maximum lift coefficient when said at least one of the wind turbine blades has a positive AoA outside a normal operating AoA range and to passively increase a minimum lift coefficient when said at least one of the wind turbine blades has a negative AoA outside the normal operating AoA range.

2. A wind turbine according to claim 1, **characterised in that** said at least one first tripping device is further configured to transform an airflow passing over the at least one first tripping device from a laminar airflow into a turbulent airflow when the AoA of said at least one of the wind turbine blades is outside the normal operating AoA range in one direction.

3. A wind turbine according to claim 1 or 2, **characterised in that** the position of the at least one first tripping device is determined according to a distance along the chord and projected towards the pressure side, where the at least one first tripping device is positioned at a distance of 0% to 1% measured along the chord from the leading edge, preferably at a distance of 0.2% to 0.6% from the leading edge.

4. A wind turbine according to any one of claims 1 to 3, **characterised in that** at least one second tripping device is further arranged on the pressure side of said at least one of the wind turbine blades, the at least one second tripping device is placed at another predetermined position relative to the leading edge, wherein the at least one second tripping device is arranged relative to the at least one first tripping device.

5. A wind turbine according to claim 4, **characterised in that** the position of the at least one second tripping device is determined according to a distance along the chord and projected towards the pressure side, where the at least one second tripping device is positioned at a distance of 1% to 3% measured along the chord from the leading edge, preferably at a distance of 1.5% to 2.5% from the leading edge.

6. A wind turbine according to claim 4 or 5, **characterised in that** each of the at least two wind turbine blades has a longitudinal length extending from the blade root to the tip end, wherein the at least one second tripping device is offset relative to the at least one first tripping device in the longitudinal direction.

7. A wind turbine according to any one of claims 1 to 6, **characterised in that** the at least one first tripping device or the at least one second tripping device has a height of 0.05 mm to 1 mm, preferably a height of 0.2 mm to 0.5 mm.

8. A wind turbine according to any one of claims 1 to 7, **characterised in that** the at least one first tripping device or the at least one second tripping device has a width of 0.5 mm to 5 mm, preferably a width of 1 mm to 3 mm.

9. A wind turbine according to any one of claims 1 to 8, **characterised in that** one of the at least one first tripping device and the at least one second tripping device have a rectangular shape in the chord-wise direction.

10. A wind turbine according to any one of claims 1 to 9, **characterised in that** each of the at least two wind turbine blades has a longitudinal length of 100% extending from the blade root to the tip end, wherein one of the at least one first tripping device and the at least one second tripping device is positioned at a distance of at least 33% measured along the longitudinal length from the blade root, preferably at least 66% from the blade root.

11. A wind turbine according to any one of claims 1 to 10, **characterised in that** at least one vortex generator unit is arranged on the suction side of said at least one of the wind turbine blades, the at least one vortex generator unit is placed at a predetermined position relative to the leading edge.

12. A method of reducing loads in a wind turbine, comprising a wind turbine tower, a nacelle arranged on top of the wind turbine tower, a rotatable rotor with at least two wind turbine blades arranged relative to the nacelle, wherein each of the at least two wind turbine blades comprises a tip end, a blade root and an aerodynamic profile, wherein the aerodynamic profile defines a leading edge, a trailing edge, a first side surface which defines a pressure side and a second side surface which defines a suction side, wherein a chord extends from the leading edge to the trailing edge and has a chord length of 100%, **characterised in that** the method comprises the steps of:
- arranging at least one tripping device at a predetermined position relative to the leading edge on the pressure side of at least one of the wind turbine blades,
- operating said at least one of the wind turbine blades within a normal operating AoA range,
- passively reducing a maximum lift coefficient via said at least one tripping device when said at least one of the wind turbine blades has a positive AoA outside the normal operating AoA range, and passively increasing a minimum lift coefficient via said at least one tripping device when said at least one of the wind turbine blades has a negative AoA outside the normal operating AoA range.

13. A method according to claim 12, **characterised in that** said at least one tripping device transforms an airflow passing over said at least one tripping device from a laminar airflow into a turbulent airflow when the AoA of said at least one of the wind turbine blades is outside the normal operating AoA range in one direction.

14. A method according to claim 12 or 13, **characterised in that** said step of arranging at least one tripping device comprises: attaching the least one tripping device to said at least one of the wind turbine blades after manufacture of the at least one of the wind turbine blades, or providing the at least one tripping device during manufacturing of the at least one of the wind turbine blades.

15. A method according to any one of claims 12 to 14, **characterised in that** the at least one tripping device is positioned on the at least one of the wind turbine blades using an installation tool, wherein said installation tool comprises means for receiving the at least one tripping device and means for aligning the at least one tripping device relative to at least one reference point.
